# EUROPÄISCHE PATENTANMELDUNG

(11) **EP 4 564 227 A1**
(43) Veröffentlichungstag der Anmeldung: **04.06.2025**
(21) Anmeldenummer: 23212985.8
(22) Anmeldetag: 29.11.2023
(51) Int. Cl.: G06N 3/0455, G06N 3/0464, G06N 3/088

(54) **VERFAHREN ZUM DETEKTIEREN EINER ANOMALIE IN EINEM SENSORSIGNAL EINES TECHNISCHEN SYSTEMS**

(71) Anmelder: Robert Bosch GmbH, 70442 Stuttgart (DE)
(72) Erfinder: Molnar, Malina, 400401 Cluj-Napoca (RO); Lazar, Vasile-Cosmin, 400365 Cluj-Napoca (RO)

(57) **Zusammenfassung**

Die Erfindung betrifft ein Verfahren (100) zum Detektieren einer Anomalie in einem Sensorsignal eines technischen Systems (1), umfassend die nachfolgenden Schritte:
- Bereitstellen (101) des Sensorsignals, wobei das Sensorsignal eine definierte Zeitspanne aufweist,
- Transformieren (102) des Sensorsignals in eine komprimierte Darstellung des Sensorsignals mittels eines Encoder-Moduls eines Maschinenlernmodells (3),
- Erzeugen (103) eines rekonstruierten Sensorsignals auf Basis der komprimierten Darstellung des Sensorsignals mittels eines Decoder-Moduls des Maschinenlernmodells (3),
- Ermitteln (104) eines Rekonstruktionsfehlers auf Basis eines Vergleichs des Sensorsignals mit dem rekonstruierten Sensorsignal,
- Detektieren (105) der Anomalie in dem Sensorsignal auf Basis des ermittelten Rekonstruktionsfehlers,

wobei das Encoder-Modul und das Decoder-Modul des Maschinenlernmodells (3) jeweils ein temporales Faltungsnetzwerk sind.
Ferner betrifft die Erfindung ein Computerprogramm, eine Vorrichtung sowie ein Speichermedium zu diesem Zweck.

## Beschreibung

Die Erfindung betrifft ein Verfahren zum Detektieren einer Anomalie in einem Sensorsignal eines technischen Systems. Ferner betrifft die Erfindung ein Computerprogramm, eine Vorrichtung sowie ein Speichermedium zu diesem Zweck.

### Stand der Technik

Anomalieerkennung mit neuronalen Netzen bezeichnet den Prozess, bei dem Modelle des maschinellen Lernens trainiert werden, um ungewöhnliche Muster oder Abweichungen in Daten zu identifizieren, die auf Fehler, Defekte oder unerwartete Ereignisse hinweisen könnten. Neuronale Netze sind dabei besonders effektiv, da sie durch ihre mehrschichtigen Strukturen und die Fähigkeit zur Feature-Extraktion auch komplexe und hochdimensionale Datenverhältnisse erfassen können.

Dabei werden im Stand der Technik beispielsweise sogenannte Autocoder für die Erkennung von Anomalien in Zeitreihen verwendet. Allerdings können sich Anomalien auch auf längeren Zeitskalen ausbilden. Ein häufig im Stand der Technik verwendetes Long Short-Term Memory des neuronalen Netzes hat dabei den Nachteil, dass es nicht in der Lage ist, Muster auch in diesen langen Zeitskalen zu erkennen.

### Offenbarung der Erfindung

Gegenstand der Erfindung ist ein Verfahren mit den Merkmalen des Anspruchs 1, ein Computerprogramm mit den Merkmalen des Anspruchs 8, eine Vorrichtung mit den Merkmalen des Anspruchs 9 sowie ein computerlesbares Speichermedium mit den Merkmalen des Anspruchs 10. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm, der erfindungsgemäßen Vorrichtung sowie dem erfindungsgemäßen computerlesbaren Speichermedium, und jeweils umgekehrt, so dass bezüglich der Offenbarung zu den einzelnen Erfindungsaspekten stets wechselseitig Bezug genommen wird bzw. werden kann.

Gegenstand der Erfindung ist insbesondere ein Verfahren zum Detektieren einer Anomalie in einem Sensorsignal eines technischen Systems, umfassend die nachfolgenden Schritte, wobei die Schritte wiederholt und/oder nacheinander ausgeführt werden können. Die Anomalie kann dabei eine Abweichung von einem regulären Verlauf des Sensorsignals sein und beispielsweise durch eine Beeinträchtigung einer Funktion des technischen Systems verursacht werden.

In einem ersten Schritt wird vorzugsweise das Sensorsignal bereitgestellt, wobei das Sensorsignal eine definierte Zeitspanne aufweist. Das Sensorsignal kann durch Sensordaten repräsentiert sein. Ein Datentyp der Sensordaten kann beispielsweise eine Spannung oder ein Strom sein. Das Sensorsignal kann aus einer Erfassung wenigstens eines Sensors resultieren, beispielsweise eines Spannungs- oder Stromsensors. Die definierte Zeitspanne kann je nach Anwendungsfall festgelegt werden und beispielsweise auf Basis von bekannten Anomalien bestimmt werden.

In einem weiteren Schritt wird das Sensorsignal vorzugsweise in eine komprimierte Darstellung des Sensorsignals mittels eines Encoder-Moduls eines Maschinenlernmodells transformiert. Das Maschinenlernmodell ist dabei vorzugsweise ein neuronales Netzwerk und weiter vorzugsweise ein Autoencoder. Ein Encoder-Modul innerhalb eines Autoencoders ist insbesondere verantwortlich für eine Transformation von Eingabedaten in eine kompaktere, dichtere Repräsentation, d.h. die komprimierte Darstellung des Sensorsignals. Der Prozess des Encodings verläuft beispielsweise wie folgt: Das Encoder-Modul nimmt vorzugsweise die Eingabedaten und komprimiert sie in einen niedrigerdimensionalen Raum. Dies wird insbesondere durch eine Folge von Schichten im neuronalen Netzwerk erreicht, wobei jede Schicht weniger Neuronen als die vorherige haben kann. Während des Trainings lernt das Encoder-Modul vorzugsweise die wichtigsten Merkmale oder Eigenschaften der Eingabedaten, beispielsweise anhand von Trainingssensorsignalen, zu extrahieren. Dies geschieht insbesondere durch ein Anpassen von Gewichten im Maschinenlernmodell, um den Verlust zwischen den rekonstruierten Ausgaben und den tatsächlichen Eingabedaten zu minimieren. Das Encoder-Modul verringert insbesondere schrittweise die Dimensionalität der Eingabedaten, wobei die relevanten Merkmale möglichst erhalten bleiben.

In einem weiteren Schritt wird vorzugsweise ein rekonstruiertes Sensorsignal auf Basis der komprimierten Darstellung des Sensorsignals mittels eines Decoder-Moduls des Maschinenlernmodells erzeugt. Das Decoder-Modul ist eine Komponente eines Maschinenlernmodells wie eines Autoencoders, die den im Encoder-Modul erzeugten Code, d.h. die komprimierte Darstellung des Sensorsignals, aufnimmt und die Aufgabe hat, daraus eine Rekonstruktion der ursprünglichen Eingabedaten, d.h. des Sensorsignals, zu generieren. Der Prozess des Decodings lässt sich beispielsweise wie folgt zusammenfassen: Das Decoder-Modul nimmt vorzugsweise die komprimierte Darstellung aus der versteckten Schicht des Encoder-Moduls und beginnt, diese wieder in einen höherdimensionalen Raum zu expandieren. Dies erfolgt insbesondere gegensätzlich zum Encoder-Prozess. Durch den Einsatz von Netzwerkschichten, die häufig die Umkehrung der Architektur des Encoder-Moduls darstellen, versucht das Decoder-Modul, die Eingabedaten so genau wie möglich zu rekonstruieren. Die Schichten des Decoders erhöhen bevorzugt progressiv die Dimensionalität der Daten, bis die Ausgangsschicht die gleiche Dimension wie die ursprünglichen Eingabedaten, d.h. wie das Sensorsignal, aufweist. Während des Trainings werden die Gewichte des Decoder-Moduls vorzugsweise so angepasst, dass ein Verlust zwischen den rekonstruierten Daten und den ursprünglichen Eingabedaten minimiert wird. Dieser Verlust wird beispielsweise mittels einer Verlustfunktion wie dem Mean Squared Error (MSE) oder Cross-Entropy in Form eines Rekonstruktionsfehlers berechnet. Ein Ziel des Decoder-Moduls ist es insbesondere, die wesentlichen Informationen, die während des Encodings behalten wurden, zu nutzen, um eine Ausgabe zu erzeugen, die eine möglichst genaue Annäherung an die ursprüngliche Eingabe ist.

Das Encoder-Modul und das Decoder-Modul des Maschinenlernmodells sind vorzugsweise jeweils ein temporales Faltungsnetzwerk. Ein Temporales Faltungsnetzwerk (englisch "Temporal Convolutional Network", TCN) ist insbesondere eine Architektur für neuronale Netze, die speziell für die Verarbeitung von sequenziellen Daten wie Zeitreihen entworfen wurde. TCNs kombinieren dabei beispielsweise die Vorteile von Faltungsnetzen (englisch "Convolutional Neural Networks", CNNs) mit denen von rekurrenten Netzwerken (englisch "Recurrent Neural Networks", RNNs), um effektive Vorhersagemodelle für Daten mit zeitlichen Abhängigkeiten zu schaffen. Sie zeichnen sich insbesondere durch die nachstehenden Merkmale aus: Anstelle von rekurrenten Strukturen nutzen TCNs insbesondere Faltungsschichten, die über die Zeit dimensioniert sind. Diese Schichten können zeitliche Abhängigkeiten erkennen, indem sie Faltungen über die Sequenz der Eingabedaten ausführen. TCNs können ferner kausale Faltungen verwenden, was insbesondere bedeutet, dass die Vorhersage für einen Zeitpunkt t nur von Daten aus der Vergangenheit und dem gegenwärtigen Zeitpunkt, nicht jedoch von zukünftigen Daten abhängt. Dies stellt beispielsweise sicher, dass das Maschinenlernmodell kausal bleibt und zeitliche Vorhersagen macht. Um lange Abhängigkeiten innerhalb der Sequenzen zu erfassen, können TCNs verdünnte Faltungen nutzen. Diese Technik erlaubt es insbesondere, ein rezeptives Feld exponentiell zu vergrößern, ohne die Anzahl der Parameter oder die Komplexität des Maschinenlernmodells zu erhöhen. Verdünnung bedeutet dabei insbesondere, dass der Abstand zwischen den an der Faltung beteiligten Punkten vergrößert wird. Ähnlich wie Residual Networks (ResNets) können TCNs Restblöcke nutzen, um das Verschwinden von Gradienten zu verhindern und tiefere Netzwerke zu ermöglichen. Diese Blöcke führen insbesondere eine direkte Verbindung zwischen früheren und späteren Schichten ein, wodurch der Lernprozess stabilisiert werden kann. TCNs sind besonders vorteilhaft für Aufgaben wie Zeitreihenanalyse, Sequenzmodellierung und Vorhersageanwendungen, bei denen lange zeitliche Abhängigkeiten eine Rolle spielen. Sie bieten insbesondere oft eine bessere Performance und sind einfacher zu optimieren als traditionelle RNNs oder Long Short-Term Memory Netze (LSTMs). Ein TCN umfasst vorzugsweise dilatierte, kausale eindimensionale Faltungsschichten mit gleichen Eingangs- und Ausgangslängen. Ein eindimensionales Faltungsnetz nimmt als Eingabe insbesondere einen 3-dimensionalen Tensor und gibt auch einen 3-dimensionalen Tensor aus.

In einem weiteren Schritt wird ein Rekonstruktionsfehler auf Basis eines Vergleichs des Sensorsignals mit dem rekonstruierten Sensorsignal ermittelt. Dafür können verschiedene Verlustfunktionen wie beispielsweise der Mean Squared Error (MSE) oder Cross-Entropy verwendet werden.

In einem weiteren Schritt wird die Anomalie in dem Sensorsignal auf Basis des ermittelten Rekonstruktionsfehlers detektiert. Das Detektieren kann beispielsweise derart durchgeführt werden, dass der ermittelte Rekonstruktionsfehler analysiert und beispielsweise mit bekannten Werten oder einem definierten Schwellwert verglichen wird, wobei die bekannten Werte oder der definierte Schwellwert für bestimmte Anomalien oder grundsätzlich für das Vorliegen einer Anomalie spezifisch sein können.

Es kann im Rahmen der Erfindung vorgesehen sein, dass das Detektieren der Anomalie ferner die folgenden Schritte umfasst:
- Definieren eines Schwellwerts für den Rekonstruktionsfehler,
- Vergleichen des ermittelten Rekonstruktionsfehlers mit dem definierten Schwellwert, um auf Basis eines Ergebnisses des Vergleichs die Anomalie in dem Sensorsignal festzustellen.

Der Schwellwert kann dabei vorteilhaft je nach Anwendungsfall definiert, beziehungsweise entsprechend angepasst, werden.

Nach einer weiteren Möglichkeit kann vorgesehen sein, dass im Falle, dass die Anomalie in dem Sensorsignal festgestellt wird, das Verfahren ferner den folgenden Schritt umfasst:
- Initiieren einer Übertragung des Sensorsignals von dem technischen System an eine externe Datenverarbeitungsvorrichtung.

Die externe Datenverarbeitungsvorrichtung kann beispielsweise ein Cloud-Server sein. Durch die Übertragung des Sensorsignals kann anschließend beispielsweise vorteilhaft über die externe Datenverarbeitungsvorrichtung eine genaue Analyse des Sensorsignals erfolgen, ohne dass dafür ein Rechenaufwand des technischen Systems selbst notwendig ist. Es kann beispielsweise mittels der externen Datenverarbeitungsvorrichtung das übertragene Sensorsignal mit einer Datenbank von verschiedenen Sensorsignalen mit Anomalien verglichen werden, um eine Art der Anomalie festzustellen. Es ist denkbar, dass ein Ergebnis der Analyse des Sensorsignals durch die externe Datenverarbeitungsvorrichtung im Anschluss zurück an das technische System übertragen wird. Alternativ könnten auch notwendige Maßnahmen im Hinblick auf das technische System, wie beispielsweise ein Aufsuchen einer Werkstatt im Falle eines Fahrzeugs als technisches System, übertragen werden.

Vorzugsweise kann vorgesehen sein, dass im Falle, dass keine Anomalie in dem Sensorsignal festgestellt wird, das Verfahren ferner den folgenden Schritt umfasst:
- Initiieren einer Übertragung der komprimierten Darstellung des Sensorsignals von dem technischen System an eine externe Datenverarbeitungsvorrichtung.

Die Übertragung kann vorzugsweise an dieselbe, im voranstehenden Abschnitt genannte, externe Datenverarbeitungsvorrichtung erfolgen. Diese kann beispielsweise als Cloud-Server ausgebildet sein. Durch die Übertragung der komprimierten Darstellung kann vorteilhaft eine Menge an Daten, welche übertragen wird, reduziert werden.

Ferner kann es im Rahmen der Erfindung vorgesehen sein, dass der Rekonstruktionsfehlers in Form einer mittleren quadratischen Abweichung, insbesondere eines Normalized Root Mean Squared Errors, ermittelt wird. Die Ermittlung des Rekonstruktionsfehlers in Form des Normalized Root Mean Squared Errors kann dabei besonders vorteilhaft sein. Der Normalized Root Mean Squared Error (NRMSE) ist insbesondere eine standardisierte Version des Root Mean Squared Error (RMSE), einer Metrik zur Bewertung der Vorhersagegenauigkeit von Modellen. Der N RMSE wird vorzugsweise errechnet, indem der RMSE durch den Unterschied zwischen dem maximalen und minimalen beobachteten Wert (die Spannweite der Daten) oder durch den Mittelwert der beobachteten Werte normiert wird. Dieser Normalisierungsprozess verleiht der Metrik beispielsweise den Vorteil, dass eine Vergleichbarkeit über verschiedene Datensätze mit unterschiedlichen Skalen und Wertebereichen hinweg ermöglicht wird. Während der RMSE absolut und in den Einheiten einer Zielvariable gemessen wird, ist der NRMSE insbesondere ein relativer Wert, der unabhängig von den Einheiten ist. Dies bedeutet beispielsweise, dass der NRMSE als prozentuale Abweichung interpretiert werden kann, was einen direkten Vergleich der Modellgüte zwischen verschiedenen Modellierungsproblemen und -kontexten ermöglicht. Alternativ oder zusätzlich können auch weitere im Stand der Technik bekannte Verlustfunktionen angewendet werden.

Es ist ferner denkbar, dass das Maschinenlernmodell auf einem Training mit Trainingssensorsignalen basiert, welche jeweils dieselbe definierte Zeitspanne aufweisen wie das Sensorsignal. Dadurch kann das Maschinenlernmodell vorteilhaft speziell auf die definierte Zeitspanne trainiert werden und dadurch effektiver Anomalien in dieser Zeitspanne detektieren.

Gemäß einer vorteilhaften Weiterbildung der Erfindung kann vorgesehen sein, dass das technische System ein Fahrzeug, insbesondere ein Energiespeicher des Fahrzeugs, ist und das Sensorsignal aus einer Messung wenigstens eines Sensors in dem Fahrzeug, insbesondere in dem Energiespeicher des Fahrzeugs, resultiert. Der Energiespeicher kann als eine Batterie, beispielsweise auch eine wiederaufladbare Batterie, oder eine Brennstoffzelle ausgebildet sein. Das Fahrzeug kann beispielsweise ein Personenkraftwagen oder ein Lastkraftwagen und ferner ein Elektro-Fahrzeug sein. Das Sensorsignal kann beispielsweise eine Spannung oder eine Stromstärke in dem Fahrzeug, insbesondere in dem Energiespeicher des Fahrzeugs, sein.

Es ist möglich, dass das erfindungsgemäße Verfahren bei einem Fahrzeug zum Einsatz kommt, insbesondere bei einem Elektro-Fahrzeug. Das Fahrzeug kann bspw. als ein Kraftfahrzeug und/oder Personenkraftfahrzeug und/oder autonomes Fahrzeug ausgebildet sein. Das Fahrzeug kann eine Fahrzeugeinrichtung, bspw. zur Bereitstellung einer autonomen Fahrfunktion und/oder ein Fahrerassistenzsystem aufweisen. Die Fahrzeugeinrichtung kann dazu ausgeführt sein, das Fahrzeug zumindest teilweise automatisch zu steuern und/oder zu beschleunigen und/oder abzubremsen und/oder zu lenken.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Ebenfalls Gegenstand der Erfindung ist eine Vorrichtung zur Datenverarbeitung, die eingerichtet ist, das erfindungsgemäße Verfahren auszuführen. Als die Vorrichtung kann bspw. ein Computer vorgesehen sein, welcher das erfindungsgemäße Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls Gegenstand der Erfindung kann ein computerlesbares Speichermedium sein, welches das erfindungsgemäße Computerprogramm aufweist und/oder Befehle umfasst, die bei der Ausführung durch einen Computer diesen veranlassen, das erfindungsgemäße Verfahren auszuführen. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Visualisierung eines Verfahrens, eines technischen Systems mit einem Sensor, einer Vorrichtung, eines Speichermediums sowie eines Computerprogramms gemäß Ausführungsbeispielen der Erfindung,
- Fig. 2: eine schematische Darstellung eines Verfahrens gemäß Ausführungsbeispielen der Erfindung.

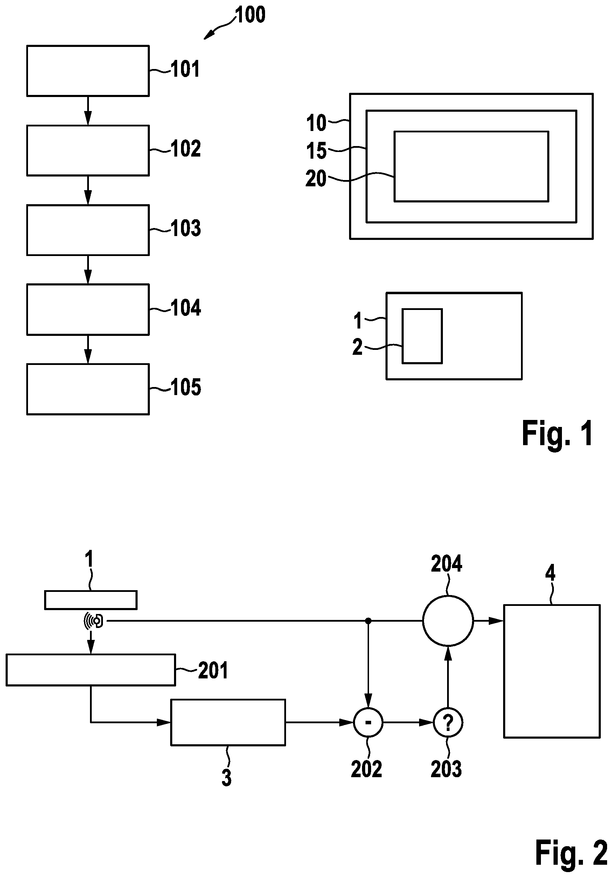

In Fig. 1 sind ein Verfahren 100, ein technisches System 1 mit einem Sensor 2, eine Vorrichtung 10, ein Speichermedium 15 sowie ein Computerprogramm 20 gemäß Ausführungsbeispielen der Erfindung schematisch dargestellt.

Fig. 1 zeigt insbesondere ein Ausführungsbeispiel für ein Verfahren 100 zum Detektieren einer Anomalie in einem Sensorsignal eines technischen Systems 1. In einem ersten Schritt 101 wird das Sensorsignal bereitgestellt, wobei das Sensorsignal eine definierte Zeitspanne aufweist. In einem zweiten Schritt 102 wird das Sensorsignal in eine komprimierte Darstellung des Sensorsignals mittels eines Encoder-Moduls eines Maschinenlernmodells 3 transformiert. In einem dritten Schritt 103 wird ein rekonstruiertes Sensorsignal auf Basis der komprimierten Darstellung des Sensorsignals mittels eines Decoder-Moduls des Maschinenlernmodells 3 erzeugt. In einem vierten Schritt 104 wird ein Rekonstruktionsfehler auf Basis eines Vergleichs des Sensorsignals mit dem rekonstruierten Sensorsignal ermittelt. In einem fünften Schritt 105 wird die Anomalie in dem Sensorsignal auf Basis des ermittelten Rekonstruktionsfehlers detektiert. Das Encoder-Modul und das Decoder-Modul des Maschinenlernmodells 3 sind dabei jeweils ein temporales Faltungsnetzwerk (TCN).

Ein Aspekt der Erfindung liegt insbesondere in der Verwendung von temporalen Faltungsnetzwerken (TCN) in einer Autoencoder-Architektur zur Erkennung von Anomalien und zur Datenkompression in Zeitreihen.

Der Algorithmus kann beispielsweise auf Flottendaten angewendet werden, die von technischen Systemen 1, insbesondere Fahrzeugen wie Lastwagen, gesammelte Sensorsignale darstellen.

Die Architektur basiert vorzugsweise auf einem Encoder-Decoder-Netzwerk. Für beide Netzwerke kann die TCN-Architektur verwendet werden. Als Kriterium für die Erkennung von Anomalien wird bevorzugt der Rekonstruktionsfehler zwischen den Eingabedaten, insbesondere Sensorsignalen, und den rekonstruierten Daten (der Ausgabe), insbesondere den rekonstruierten Sensorsignalen, verwendet.

Das dadurch bereitgestellte Maschinenlernmodell 3 kann effizienter trainiert werden, da die Gradienten nicht wie bei den Long Short-Term Memory`s (LSTMs) aus der Vergangenheit bestimmt werden, sondern die Faltungsschichten verwendet werden können, so dass das Problem der verschwindenden Gradienten, das bei den LSTMs auftritt, ebenfalls verschwindet.

Dieses Konzept lässt sich beispielsweise auf die Erkennung multivariater Zeitreihenanomalien übertragen. In diesem Fall können Faltungen höherer Dimensionen verwendet werden, analog der Bildfaltung.

Beide oben genannten Konzepte können auch bei der Datenkompression eingesetzt werden.

Im Folgenden wird mit Bezug auf Fig. 2 ein Verfahren gemäß einem Ausführungsbeispiel beschrieben. Zunächst kann ein Maschinenlernmodell 3 offline aus verfügbaren Trainingssensorsignalen trainiert werden. Das Maschinenlernmodell 3 wird vorzugsweise mit Trainingssensorsignalen einer definierten Zeitspanne trainiert. In einem weiteren Schritt kann das Maschinenlernmodell 3 auf einer Hardware, d.h. insbesondere auf einem technischen System 1 wie einem Fahrzeug, eingesetzt werden, die Sensorsignale von Sensoren 2 empfängt. In einem Schritt 201 kann das Maschinenlernmodell 3 auf der Hardware, bzw. dem technischen System 1, als Eingabe eine Reihe von Sensorsignalen erhalten, die die gleiche definierte Zeitspanne aufweisen wie die in der Trainingsphase verwendeten Trainingssensorsignale. In einem weiteren Schritt 202 wird insbesondere ein Approximationsfehler, bzw. Rekonstruktionsfehler, zwischen der Ausgabe des Maschinenlernmodells und den Eingangssensorsignalen berechnet. Dieser Fehler kann mit beispielsweise Normalized Root Mean Squared Error (NRMSE) berechnet werden. Liegt der NRMSE gemäß einer entsprechenden Analyse 203 unter einem definierten Schwellenwert (z.B. <5%), so bedeutet dies insbesondere, dass das Maschinenlernmodell die als Eingabe verwendeten Sensorsignale genau rekonstruieren kann. Daher wird gemäß einer ersten Alternative in Schritt 204 vorzugsweise nur die Ausgabe des Encoders, die eine komprimierte Version der ursprünglichen Eingabe umfasst, an eine externe Datenverarbeitungsvorrichtung 4, wie beispielsweise einem Cloud-Server, gesendet, um die Menge an zu übertragenden Daten zu reduzieren. Andernfalls werden gemäß einer zweiten Alternative in Schritt 204 vorzugsweise die Sensorsignale an die externe Datenverarbeitungsvorrichtung 4 übertragen. Die Rekonstruktion der ursprünglichen Messungen kann (z. B. bei Bedarf) unter der Voraussetzung erfolgen, dass der Decoderteil des Modells verfügbar ist.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Verfahren (100) zum Detektieren einer Anomalie in einem Sensorsignal eines technischen Systems (1), umfassend die nachfolgenden Schritte:
- Bereitstellen (101) des Sensorsignals, wobei das Sensorsignal eine definierte Zeitspanne aufweist,
- Transformieren (102) des Sensorsignals in eine komprimierte Darstellung des Sensorsignals mittels eines Encoder-Moduls eines Maschinenlernmodells (3),
- Erzeugen (103) eines rekonstruierten Sensorsignals auf Basis der komprimierten Darstellung des Sensorsignals mittels eines Decoder-Moduls des Maschinenlernmodells (3),
- Ermitteln (104) eines Rekonstruktionsfehlers auf Basis eines Vergleichs des Sensorsignals mit dem rekonstruierten Sensorsignal,
- Detektieren (105) der Anomalie in dem Sensorsignal auf Basis des ermittelten Rekonstruktionsfehlers,
wobei das Encoder-Modul und das Decoder-Modul des Maschinenlernmodells (3) jeweils ein temporales Faltungsnetzwerk sind.

2. Verfahren (100) nach Anspruch 1,
**dadurch gekennzeichnet,**
**dass** das Detektieren (105) der Anomalie ferner die folgenden Schritte umfasst:
- Definieren eines Schwellwerts für den Rekonstruktionsfehler,
- Vergleichen des ermittelten Rekonstruktionsfehlers mit dem definierten Schwellwert, um auf Basis eines Ergebnisses des Vergleichs die Anomalie in dem Sensorsignal festzustellen.

3. Verfahren (100) nach Anspruch 2,
**dadurch gekennzeichnet,**
**dass** im Falle, dass die Anomalie in dem Sensorsignal festgestellt wird, das Verfahren ferner den folgenden Schritt umfasst:
- Initiieren einer Übertragung des Sensorsignals von dem technischen System (1) an eine externe Datenverarbeitungsvorrichtung (4).

4. Verfahren (100) nach Anspruch 2 oder 3,
**dadurch gekennzeichnet,**
**dass** im Falle, dass keine Anomalie in dem Sensorsignal festgestellt wird, das Verfahren ferner den folgenden Schritt umfasst:
- Initiieren einer Übertragung der komprimierten Darstellung des Sensorsignals von dem technischen System (1) an eine externe Datenverarbeitungsvorrichtung (4).

5. Verfahren (100) nach einem der vorhergehenden Ansprüche,
**dadurch gekennzeichnet,**
**dass** der Rekonstruktionsfehlers in Form einer mittleren quadratischen Abweichung, insbesondere eines Normalized Root Mean Squared Errors, ermittelt wird.

6. Verfahren (100) nach einem der vorhergehenden Ansprüche,
**dadurch gekennzeichnet,**
**dass** das Maschinenlernmodell (3) auf einem Training mit Trainingssensorsignalen basiert, welche jeweils dieselbe definierte Zeitspanne aufweisen wie das Sensorsignal.

7. Verfahren (100) nach einem der vorhergehenden Ansprüche,
**dadurch gekennzeichnet,**
**dass** das technische System (1) ein Fahrzeug, insbesondere ein Energiespeicher des Fahrzeugs, ist und das Sensorsignal aus einer Messung wenigstens eines Sensors (2) in dem Fahrzeug, insbesondere in dem Energiespeicher des Fahrzeugs, resultiert.

8. Computerprogramm (20), umfassend Befehle, die bei der Ausführung des Computerprogramms (20) durch einen Computer (10) diesen veranlassen, das Verfahren (100) nach einem der vorhergehenden Ansprüche auszuführen.

9. Vorrichtung (10) zur Datenverarbeitung, die eingerichtet ist, das Verfahren (100) nach einem der Ansprüche 1 bis 7 auszuführen.

10. Computerlesbares Speichermedium (15), umfassend Befehle, die bei der Ausführung durch einen Computer (10) diesen veranlassen, die Schritte des Verfahrens (100) nach einem der Ansprüche 1 bis 7 auszuführen.

## Geänderte Patentansprüche

### Geänderte Patentansprüche gemäss Regel 137(2) EPÜ.

1. Computerimplementiertes Verfahren (100) zum Detektieren einer Anomalie in einem Sensorsignal eines technischen Systems (1), umfassend die nachfolgenden Schritte:
- Bereitstellen (101) des Sensorsignals, wobei das Sensorsignal eine definierte Zeitspanne aufweist,
- Transformieren (102) des Sensorsignals in eine komprimierte Darstellung des Sensorsignals mittels eines Encoder-Moduls eines Maschinenlernmodells (3),
- Erzeugen (103) eines rekonstruierten Sensorsignals auf Basis der komprimierten Darstellung des Sensorsignals mittels eines Decoder-Moduls des Maschinenlernmodells (3),
- Ermitteln (104) eines Rekonstruktionsfehlers auf Basis eines Vergleichs des Sensorsignals mit dem rekonstruierten Sensorsignal,
- Detektieren (105) der Anomalie in dem Sensorsignal auf Basis des ermittelten Rekonstruktionsfehlers,
wobei das Encoder-Modul und das Decoder-Modul des Maschinenlernmodells (3) jeweils ein temporales Faltungsnetzwerk sind,
wobei das Detektieren (105) der Anomalie ferner die folgenden Schritte umfasst:
- Definieren eines Schwellwerts für den Rekonstruktionsfehler,
- Vergleichen des ermittelten Rekonstruktionsfehlers mit dem definierten Schwellwert, um auf Basis eines Ergebnisses des Vergleichs die Anomalie in dem Sensorsignal festzustellen,
wobei im Falle, dass die Anomalie in dem Sensorsignal festgestellt wird, das Verfahren ferner den folgenden Schritt umfasst:
- Initiieren einer Übertragung des Sensorsignals von dem technischen System (1) an eine externe Datenverarbeitungsvorrichtung (4),
und im Falle, dass keine Anomalie in dem Sensorsignal festgestellt wird, das Verfahren ferner den folgenden Schritt umfasst:
Initiieren einer Übertragung der komprimierten Darstellung des Sensorsignals von dem technischen System (1) an die externe Datenverarbeitungsvorrichtung (4).

2. Computerimplementiertes Verfahren (100) nach einem der vorhergehenden Ansprüche,
**dadurch gekennzeichnet,**
**dass** der Rekonstruktionsfehlers in Form einer mittleren quadratischen Abweichung, insbesondere eines Normalized Root Mean Squared Errors, ermittelt wird.

3. Computerimplementiertes Verfahren (100) nach einem der vorhergehenden Ansprüche,
**dadurch gekennzeichnet,**
**dass** das Maschinenlernmodell (3) auf einem Training mit Trainingssensorsignalen basiert, welche jeweils dieselbe definierte Zeitspanne aufweisen wie das Sensorsignal.

4. Computerimplementiertes Verfahren (100) nach einem der vorhergehenden Ansprüche,
**dadurch gekennzeichnet,**
**dass** das technische System (1) ein Fahrzeug, insbesondere ein Energiespeicher des Fahrzeugs, ist und das Sensorsignal aus einer Messung wenigstens eines Sensors (2) in dem Fahrzeug, insbesondere in dem Energiespeicher des Fahrzeugs, resultiert.

5. Computerprogramm (20), umfassend Befehle, die bei der Ausführung des Computerprogramms (20) durch einen Computer (10) diesen veranlassen, das computerimplementierte Verfahren (100) nach einem der vorhergehenden Ansprüche auszuführen.

6. Vorrichtung (10) zur Datenverarbeitung, die eingerichtet ist, das computerimplementierte Verfahren (100) nach einem der Ansprüche 1 bis 4 auszuführen.

7. Computerlesbares Speichermedium (15), umfassend Befehle, die bei der Ausführung durch einen Computer (10) diesen veranlassen, die Schritte des computerimplementierten Verfahrens (100) nach einem der Ansprüche 1 bis 4 auszuführen.
